# FASCICULE DE BREVET EUROPEEN

(11) **EP 3 488 486 B1**
(45) Date de publication et mention de la délivrance du brevet: **17.03.2021**
(21) Numéro de dépôt: 17830159.4
(22) Date de dépôt: 21.07.2017
(51) Int. Cl.: H01M 10/54

(54) **PROCÉDÉ POUR LE RECYCLAGE DU GRAPHÈNE D'UN MATÉRIAU D'ÉLECTRODE**
VERFAHREN ZUR WIEDERVERWERTUNG VON GRAPHEN AUS EINEM ELEKTRODENMATERIAL
PROCESS FOR RECYCLING GRAPHENE FROM AN ELECTRODE MATERIAL

(30) Priorité: 22.07.2016 US 201662365441 P
(43) Date de publication de la demande: 29.05.2019
(73) Titulaire: Hydro-Québec, Montréal, Québec H2Z 1A4 (CA); Transfert Plus, S.E.C., Montréal, Québec H3C 2G9 (CA)
(72) Inventeur: DELAPORTE, Nicolas, Montréal Québec H1W 1H4 (CA); OSSONON, Diby Benjamin, Montréal Québec H4P 1S4 (CA); ZAGHIB, Karim, Longueuil Québec J4N 1T8 (CA); BELANGER, Daniel, Saint-Hubert Québec J3Y 8T9 (CA)
(74) Mandataire: Lavoix
(86) Numéro de dépôt international: PCT/CA2017/050880
(87) Numéro de publication internationale: WO 2018/014136

(56) Documents cités:
- MORADI BAHAR ET AL: "Recycling of graphite anodes for the next generation of lithium ion batteries", JOURNAL OF APPLIED ELECTROCHEMISTRY, SPRINGER, DORDRECHT, NL, vol. 46, no. 2, 28 décembre 2015 (2015-12-28), pages 123-148, XP035911969, ISSN: 0021-891X, DOI: 10.1007/S10800-015-0914-0 [extrait le 2015-12-28]
- 'Preparing graphene from anode graphite of spent lithium-ion batteries' FRONT. ENVIRON. SCI. ENG. vol. 11, no. 5, 2017, page 6, XP036330084
- TANONG ET AL.: 'Metal Recycling Technologies for Battery Waste' 14 Novembre 2013, QUEBEC, QC, CANADA, XP055454282
- E. GRATZ ET AL.: 'A closed loop process for recycling spent lithium ion batteries' J. POWER SOURCES vol. 262, 2014, page 255, XP029025981

## Description

### DEMANDE PRIORITAIRE

La présente demande revendique la priorité, sous la loi applicable, de la demande provisoire américaine no 62/365,441 déposée le 22 juillet: 2016.

### DOMAINE TECHNIQUE

Le domaine technique se rapporte de manière générale aux procédés de recyclage du graphène de matériaux d'électrodes, par exemple, un procédé pour le recyclage du graphène d'une électrode comprenant du graphène et un matériau électrochimiquement actif utilisé dans les piles Li-ion. La présente technologie se rapporte aussi à l'utilisation du graphène ainsi recyclé pour la préparation d'électrodes utilisées dans des cellules électrochimiques.

### ÉTAT DE LA TECHNIQUE

Le graphène est connu pour être un matériau coûteux, et les méthodes classiques pour recycler le graphène des batteries Li-ion utilisent des solvants tels que la N-méthyl-2-pyrrolidone (NMP) pour solubiliser le liant (par exemple PVDF) et séparer le film de graphène du collecteur de courant. Cette étape de solubilisation est généralement suivie par un traitement thermique (voir Contestabile et al., J. Power Sources, 2001, 92, pages 65-69). Des solvants nocifs ou des acides ou bases forts peuvent aussi être utilisés dans ces méthodes conventionnelles. Aussi, les méthodes industrielles pour le recyclage des matériaux de collecteurs de courant, tels que l'aluminium, ne sont pas efficaces tant du point de vue économique qu'énergétique (Gaines L., Sustainable Material and Technologies, 2001, 1-2, pages 2-7).

Il existe donc un besoin pour de nouvelles méthodes pour le recyclage du graphène d'un matériau d'électrode comprenant du graphène et un matériau électrochimiquement actif, évitant au moins un des désavantages des procédés présentement utilisés. Par exemple, une telle nouvelle méthode inclurait des étapes simplifiées, utiliserait des solvants respectueux de l'environnement et/ou impliquerait une consommation d'énergie plus faible.

### SOMMAIRE

La présente technologie concerne un procédé pour le recyclage d'un matériau d'électrode comprenant du graphène et un matériau électrochimiquement actif, le procédé comprenant les étapes :
(i) d'addition, selon un ordre quelconque, d'eau et d'un solvant non miscible au matériau d'électrode, formant ainsi un système biphasique comprenant une phase organique et une phase aqueuse;
(ii) de séparation des phases organique et aqueuse; et
(iii) de filtration de la phase organique afin de récupérer le graphène.

Dans un mode de réalisation, le procédé comprend en outre, avant l'étape (i), une étape de lavage du matériau d'électrode à l'aide d'un solvant pour l'obtention d'une suspension de graphène et de matériau électrochimiquement actif, et une étape de filtration de la suspension. Par exemple, l'étape de lavage comprend en outre le traitement de la suspension dans un bain à ultrasons. Le filtrat obtenu lors de la filtration de la suspension peut en outre comprendre une étape supplémentaire de lavage avec un solvant, par exemple, le même solvant que celui utilisé pour l'étape de lavage.

Dans un mode de réalisation, le procédé comprend en outre, avant l'étape (i), une étape de traitement thermique effectuée à une température située entre environ 400°C et environ 550°C pour au moins 20 minutes, par exemple, à une température d'environ 500°C et pour une période de temps situé entre 20 et 60 minutes. Dans un autre mode de réalisation, le procédé comprend en outre une étape de pré-séchage avant l'étape de traitement thermique.

Dans un autre mode de réalisation, le solvant non miscible utilisé dans le système biphasique du procédé ici défini est un ester de carbonate, par exemple, du carbonate de diéthyle, du carbonate de diméthyle ou du carbonate d'éthyle et de méthyle. Dans le système biphasique, le rapport eau/solvant non miscible peut se situer entre environ 3:1 et environ 1:2, ou entre environ 2:1 et environ 1:1. Après la séparation des deux phases du système biphasique, la phase organique est éventuellement lavée avec de l'eau désionisée afin d'éliminer les traces résiduelles du matériau électrochimiquement actif. Le procédé comprend aussi une étape optionnelle de récupération de la phase aqueuse et de régénération du matériau électrochimiquement actif.

Dans un autre mode de réalisation, le matériau électrochimiquement actif présent dans le matériau d'électrode est choisi parmi TiO₂, Li₂TiO₃, Li₄Ti₅O₁₂, H₂Ti₅O₁₁, H₂Ti₄O₉, ou une de leurs combinaisons, LiM'PO₄ dans lequel M' est Fe, Ni, Mn, Co, ou une de leurs combinaisons, LiV₃O₈, V₂O₅, LiMn₂O₄, LiM"O₂, dans lequel M" est Mn, Co, Ni, ou une de leurs combinaisons, Li(NiM''')O₂, dans lequel M'" est Mn, Co, Al, Fe, Cr, Ti, ou Zr, et une de leurs combinaisons. Selon un exemple, le matériau électrochimiquement actif présent dans le matériau d'électrode est un titanate de lithium ou un phosphate de lithium et de métal, par exemple, Li₄Ti₅O₁₂, LiFePO₄, ou LiFePO₄ enrobé de carbone.

### BRÈVE DESCRIPTION DES FIGURES

La Figure 1 est une illustration schématique de la méthode de recyclage d'électrodes à base de graphène selon une mode de réalisation de la présente technologie.
La Figure 2 est une photographie montrant la séparation du graphène d'une poudre de LTO selon une mode de réalisation.
La Figure 3 montre les courbes thermogravimétriques d'une poudre LiFePO₄/C (LFP) et d'une poudre de graphène (EG).
La Figure 4 montre les courbes thermogravimétriques d'une poudre de graphène avant (EG) et après (EG recyclé) application de la méthode de recyclage selon une mode de réalisation.
La Figure 5 montre les diagrammes de diffraction des rayon X : a) d'une couche autoportante de graphène, b) d'une couche de graphène recyclé selon une mode de réalisation sur un séparateur Celgard®, c) d'une couche d'oxyde sur un séparateur Celgard®, et d) d'un séparateur Celgard® seul. Les pics attribués aux particules d'oxyde sont identifiés par des cercles (●).
La Figure 6 montre des images par Microscopie Électronique à Balayage (MEB) de la couche de graphène recyclé selon une mode de réalisation et obtenues à: a) 250X, b) 1000X, c) 5000X et d) 10000X. Les cercles indiquent possiblement des particules d'oxyde résiduel.
La Figure 7 montre des images par MEB du film d'oxyde déposé sur un séparateur Celgard®, obtenues à : a) 250X, b) 1000X, c) 5000X et d) 10000X. Une photographie optique du film d'oxyde est aussi présentée.
La Figure 8 montre les capacités spécifiques de charges (carrés) et décharges (cercles) d'une électrode autoportante de graphène cyclée à des taux variant de 50 à 1000 mA/g.
La Figure 9 montre les capacités spécifiques de charges (carrés) et décharges (cercles) d'une anode de graphène recyclé, l'anode étant cyclée à des taux variant de 50 à 1000 mA/g.
La Figure 10 montre des images par MEB d'une couche autoportante de graphène obtenues à a) 250X, b) 1000X et c) 5000X.
La Figure 11 montre les profils de charge/décharge à des taux variant de 50 à 1000 mA/g pour une électrode autoportante de graphène, où le second cycle est représenté pour chaque densité de courant.

### DESCRIPTION DÉTAILLÉE

Dans le présent document, le terme « environ » lorsque suivi d'une mesure ou valeur rapportée signifie à l'intérieur des limites acceptables de l'erreur expérimentale telle que déterminée par la personne versée dans l'art, qui dépendra en partie de la façon dont la valeur est mesurée ou calculée, c'est-à-dire suivant les limites de l'équipement de mesure. Cette valeur tiendra aussi compte du nombre de chiffres significatifs exprimés et de l'arrondissement des valeurs. Dans l'alternative, à moins d'indication contraire, lorsque le terme « environ » est utilisé dans la présente description ou les revendications, celui-ci signifie qu'une marge d'erreur doit être assumée, par exemple de plus ou moins 10%, ou de plus ou moins 5%, ou encore de plus ou moins 1%, de la valeur décrite.

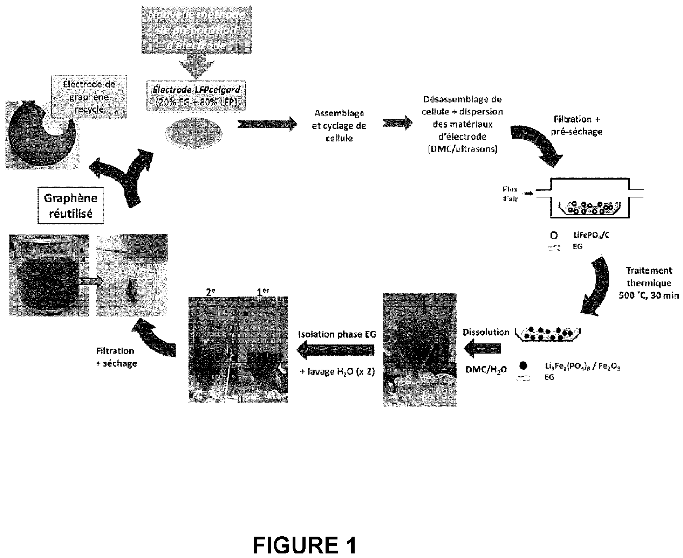

L'utilisation du graphène de manière plus répandue est encore présentement limitée par son coût élevé. Par conséquent, un processus de recyclage pour récupérer le graphène contenu dans une batterie usée a été développé. Ce procédé, dont un mode de réalisation est illustré à la Figure 1, est simple, utilise des solvants verts, évitant l'utilisation d'une grande quantité de NMP pour solubiliser le liant et séparer les différents composants et matériaux d'une batterie. De plus, seul un court traitement thermique sous air ambiant peut être requis pour des particules de matériau électrochimiquement actif revêtues de carbone.

Selon un premier aspect, cette technologie concerne un procédé de recyclage d'un matériau d'électrode comprenant du graphène et, éventuellement, un matériau électrochimiquement actif. Le présent procédé peut être appliqué, par exemple, lorsque le matériau d'électrode ne comprend pas de liant polymère tel que le PVDF.

Dans un mode de réalisation, le procédé comprend une étape consistant à ajouter au matériau de l'électrode, dans n'importe quel ordre, de l'eau et un solvant non miscible. Par « solvant non miscible » on entend ici un solvant organique non miscible dans l'eau dans les proportions et conditions d'utilisation (par exemple, à température ambiante). L'ajout d'eau et de solvant non miscible conduit à la formation d'un système à deux phases comprenant une phase organique et une phase aqueuse. Le graphène est alors présent dans la phase organique, tandis que le matériau électrochimiquement actif se retrouve dans la phase aqueuse.

Le solvant non miscible peut être un ester de carbonate tel que le carbonate de diéthyle, le carbonate de diméthyle ou le carbonate d'éthyle et de méthyle. Le solvant est utilisé dans des proportions qui permettent la production d'un système à biphasique. Par exemple, le système à biphasique peut contenir de l'eau et le solvant non miscible dans un rapport allant d'environ 3:1 à environ 1:2, bornes incluses. Dans un mode de réalisation préféré, le solvant est du carbonate de diméthyle et le rapport eau/solvant est d'environ 2:1 à environ 1:1, ou d'environ 2:1.

Dans un mode de réalisation, le matériau électrochimiquement actif comprend un matériau choisi parmi le groupe constitué des titanates, titanates de lithium, phosphates de lithium et de métal, oxydes de vanadium, oxydes de lithium et de métal, et leurs combinaisons lorsque pertinent. Par exemple, le matériau électrochimiquement actif peut être choisi parmi TiO₂, Li₂TiO₃, Li₄Ti₅O₁₂, H₂Ti₅O₁₁ et H₂Ti₄O₉, ou une de leurs combinaisons, LiM'PO₄ dans lequel M' est Fe, Ni, Mn, Co, ou une de leurs combinaisons, LiV₃O₈, V₂O₅, LiMn₂O₄, LiM"O₂, dans lequel M" est Mn, Co, Ni, ou une de leurs combinaisons, Li(NiM''')O₂, dans lequel M'" est Mn, Co, Al, Fe, Cr, Ti, ou Zr, et leurs combinaisons. Selon un exemple, le matériau électrochimiquement actif est choisi parmi les titanates de lithium et les phosphates de lithium et de métal, par exemple, le Li₄Ti₅O₁₂ ou le LiFePO₄.

Le procédé de recyclage peut comprendre une étape de séparation de la phase organique de la phase aqueuse. Le graphène est donc récupéré du matériau de l'électrode en utilisant une extraction liquide-liquide. La phase organique comprenant le graphène peut aussi être lavée avec de l'eau désionisée afin d'éliminer les traces restantes du matériau électrochimiquement actif. La phase organique ainsi obtenue est alors filtrée pour récupérer le graphène. Le graphène récupéré par la présente méthode de recyclage peut ensuite être utilisé dans la fabrication de matériaux d'électrodes. La phase aqueuse peut aussi être récupérée et le matériau électrochimiquement actif peut être regénéré pour utilisation éventuelle dans la fabrication de matériaux d'électrodes.

Les particules de matériau électrochimiquement actif présentes dans le matériau d'électrode à être recyclé peuvent aussi être enrobées de carbone. Par exemple, le matériau électrochimiquement actif peut être un phosphate de lithium et de métal (LiM'PO₄ tel que décrit ici) enrobé de carbone, tel que LiFePO₄ enrobé de carbone (référé ci-dessous comme LiFePO₄/C). Dans le cas où le matériau électrochimiquement actif est enrobé de carbone, le procédé de recyclage du graphène à partir du matériau d'électrode peut comprendre des étapes additionnelles avant l'ajout d'eau et d'un solvant non miscible (traitement biphasique).

Dans un mode de réalisation, le procédé comprend une étape de lavage du matériau d'électrode avec un solvant, récupérant ainsi un mélange de graphène et de matériau électrochimiquement actif. Le solvant peut être un ester de carbonate tel que le carbonate de diéthyle, le carbonate de diméthyle ou le carbonate d'éthyle et de méthyle. Par exemple, le matériau d'électrode peut être mélangé avec le solvant et traité dans un bain à ultrasons.

Dans un mode de réalisation, le mélange comprenant le graphène et le matériau électrochimiquement actif résultant de l'étape précédente de lavage est filtré afin de retirer le solvant et récupérer une poudre comprenant le graphène et le matériau électrochimiquement actif. La poudre filtrée peut être aussi lavée avec un solvant afin d'éliminer un excédent de sel ou toutes autres impuretés solubles. Le solvant peut être le même solvent que celui utilisé dans l'étape précédente de lavage, ou tout autre solvant approprié connu de la personne versée dans l'art.

Selon un mode de réalisation, la poudre est ensuite traitée thermiquement. Le traitement thermique peut être effectué à une température située entre environ 400°C et environ 550°C, bornes incluses, et durer pour au moins 20 minutes. Par exemple, la température du traitement thermique est d'environ 500°C. Le traitement thermique peut durer entre 20 à 60 min. Un tel traitement thermique permet de retirer l'enrobage de particules de matériau électrochimiquement actif enrobées de carbone et/ou permet l'oxydation du matériau électrochimiquement actif.

Dans un mode de réalisation, une étape de pré-séchage peut être effectuée avant de traiter la poudre thermiquement. Par exemple, la poudre de graphène et de matériau électrochimiquement actif peut être préséchée par jet d'air ou par toute autre technique courante.

Dans un mode de réalisation, l'étape d'ajout d'eau et d'un solvent non miscible à la poudre de graphène et de matériau électrochimiquement actif, et l'étape de séparation et filtration de la phase organique, telles que décrites ci-dessus, sont accomplies après l'étape de traitement thermique.

### EXEMPLES

Les exemples non-limitatifs suivants sont des modes de réalisation pour fins d'illustration et ne devraient pas être interprétés comme limitant la portée de la présente invention. Ces exemples seront mieux compris en référence aux figures ci-jointes.

### Exemple 1 - Préparation d'électrode et cellule électrochimique à base de graphène

### a) Exfoliation électrochimique d'une feuille de graphite

La poudre de graphène a été obtenue par exfoliation électrochimique d'une feuille de graphite (Alfa Aesar, 7,5 cm × 2 cm × 0,05 cm) (voir la demande canadienne de brevet no 2,803,772). Par exemple, la feuille de graphite est utilisée comme anode (connectée à la borne positive d'une alimentation en courant continu). La contre-électrode est alors constituée d'un treillis de platine (4 cm²). La feuille de graphite et la contre-électrode sont immergées dans une solution électrolytique de 0,1 M H₂SO₄ et sont séparées par une distance constante de 4 cm. L'exfoliation électrochimique a été effectuée par l'application d'un voltage CC de 6, 8 ou 10 V entre les deux électrodes. Après environ 1 h d'électrolyse, la solution contenant le graphène exfolié a été filtrée sous vide avec un assemblage de type Büchner et un filtre à membrane de polytétrafluoroéthylène (PTFE) avec une taille de pores de 0,47 µm. La poudre résultante de graphène exfolié, nommée EG dans les Figures de la présente description, a ensuite été lavée plusieurs fois avec de l'eau Nanopure® afin d'éliminer l'acide résiduel avant d'être dispersée dans du diméthylformamide (DMF) par ultrasonication pendant 10 min. La dispersion a été recueillie et le matériau résultant a été traité pendant 1 heure à 1000°C sous argon hydrogéné à 5% et ensuite utilisé pour la fabrication d'anode et de cathode comme décrit ci-dessous.

### b) Préparation d'électrodes autoportantes de graphène

Pour la préparation d'électrodes autoportantes de graphène, une quantité mesurée de la poudre de graphène exfoliée de l'étape a), choisie de manière à atteindre une concentration comprise entre 100 et 400 mg/L, a été dispersée dans 50 mL de DMF et mise dans un bain à ultrasons pendant 30 min. Les graphènes régulier (ou "frais") et recyclé ont tous deux été utilisés. Le mélange résultant a ensuite été filtré sur un filtre de Nylon® pour plusieurs heures. Lorsque suffisamment sèche la couche de graphène a été retirée du filtre et séchée à nouveau à 80°C sous vide durant 24 h. La couche de graphène a ensuite été traitée thermiquement dans un four tubulaire à 1000 °C pendant 2 h sous argon hydrogéné à 5%, et utilisée comme électrode, sans additif, liant ou collecteur de courant.

### c) Préparation de cellules électrochimiques

Les différentes électrodes de graphène ont été caractérisées dans des cellules de type bouton à deux électrodes avec du lithium métallique comme électrode négative, un séparateur Celgard®-2320 imprégné d'un électrolyte de LiPF₆ 1M dans un mélange de carbonate d'éthylène (EC)/carbonate de diéthyle (DEC)/carbonate de diméthyle (DMC) (1:1:1 par vol.) et du graphène exfolié ou du graphène exfolié recyclé à 100% comme électrode positive. Les cellules ont été assemblées dans un boite à gants remplie d'argon sec. Les cellules ont été contrôlées avec un potentiostat VMP3™ et la procédure de charge/décharge de cyclage a été effectuée en mode galvanostatique entre 0,01 et 1,5 V contre Li/Li⁺ à différentes densités de courant, et ce, après 1 heure de repos sous tension en circuit ouvert (OCV). Pour chaque densité de courant allant de 50 mA/g à 1 A/g, 10 cycles ont été enregistrés.

### Exemple 2 - Recyclage de batteries Li-ion et récupération de graphène

### a) Recyclage d'électrodes de Graphène/LFP

Tel qu'illustré à la Figure 1, les électrodes de LFP comprenant du graphène et un matériau électrochimiquement actif (***LFPcelgard***) ont été fabriquées selon la méthode de l'Exemple 1 où aucun liant ou collecteur de courant n'ont été utilisés, et où les matériaux d'électrode comprenant du graphène et un matériau électrochimiquement actif ont été filtrés sur un séparateur polymère pour former une couche de matériau d'électrode agissant comme électrode. Le graphène et le matériau électrochimiquement actif (LiFePO₄/C), utilisés dans un rapport graphène/LiFePO₄ de 20:80, ont été récupérés par le lavage des différents composants avec du carbonate de diméthyle (DMC) dans un bain à ultrasons. Le mélange a été filtré et lavé à nouveau avec du DMC pour éliminer l'excédent de sel. Après un court pré-séchage, la poudre résultante, composée de LiFePO₄/C et de graphène, a été traitée thermiquement à 500°C pendant 30 min pour éliminer l'enrobage de carbone et pour oxyder les particules de LiFePO₄. Après cette étape, le graphène a été séparé des produits d'oxydation et de dégradation du LiFePO₄/C par dispersion dans un mélange eau/DMC (rapport volumique de 2:1). La phase organique contenait la majorité du graphène. La phase aqueuse (sur le dessus) était de couleur orange, ce qui a confirmé la présence d'espèces oxydées comme Li₃Fe₂(PO₄)₃ et Fe₂O₃. Puis, la phase organique a été séparée et lavée deux fois avec de l'eau désionisée pour éliminer les traces résiduelles de produits oxydés. Finalement, la phase DMC a été filtrée et la poudre de graphène recyclée a été obtenue avec un rendement d'environ 80%.

### b) Recyclage d'électrodes de Graphène/LTO

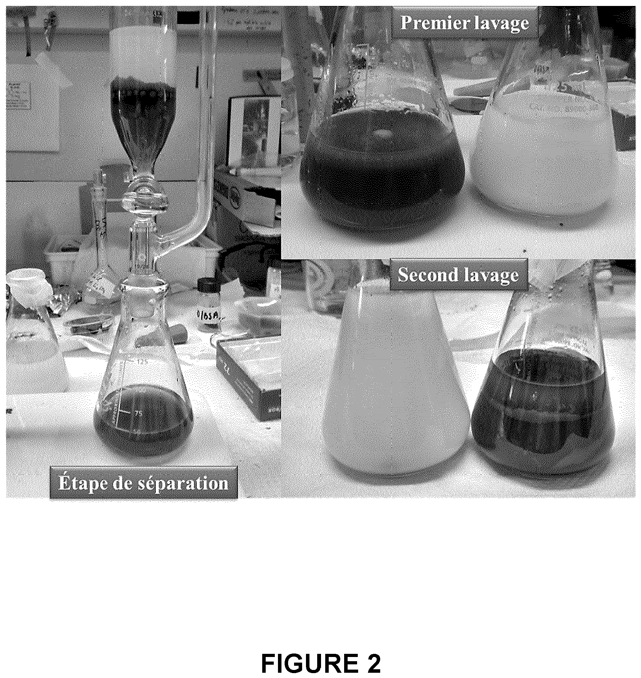

Les particules de matériau actif de LTO présentes dans le matériau d'électrode n'étaient pas préalablement enrobées d'une couche de carbone. Par conséquent, comme illustré sur l'image de la Figure 2, aucun traitement thermique n'était nécessaire. Le matériau électrochimiquement actif (Li₄Ti₅O₁₂ et graphène) a donc été dispersé dans du DMC, filtré et lavé avec du DMC afin d'éliminer les sels de lithium restant. La poudre obtenue a ensuite été suspendue dans de l'eau désionisée et du DMC. Plus spécifiquement, le LTO (présent dans la phase aqueuse) a été séparé du graphène (présent dans la phase organique). La phase organique a été lavée deux fois avec de l'eau désionisée, pour obtenir une phase organique riche en graphène et une phase aqueuse contenant du LTO. Les phases ont été séparées et la poudre de graphène a été isolé par filtration.

### Exemple 3 - Caractérisation des électrodes et du matériau de graphène

### a) Analyse thermogravimétrique

La stabilité thermique de poudres de graphène régulier et de graphène recyclé a été évaluée par analyse thermogravimétrique (TGA) effectuée sous un débit d'air constant de 90 mL/min à une température de 30 à 1000 °C et une vitesse de chauffage de 10 °C/min, en utilisant des instruments TGA (Q500™) / Discovery MS™.

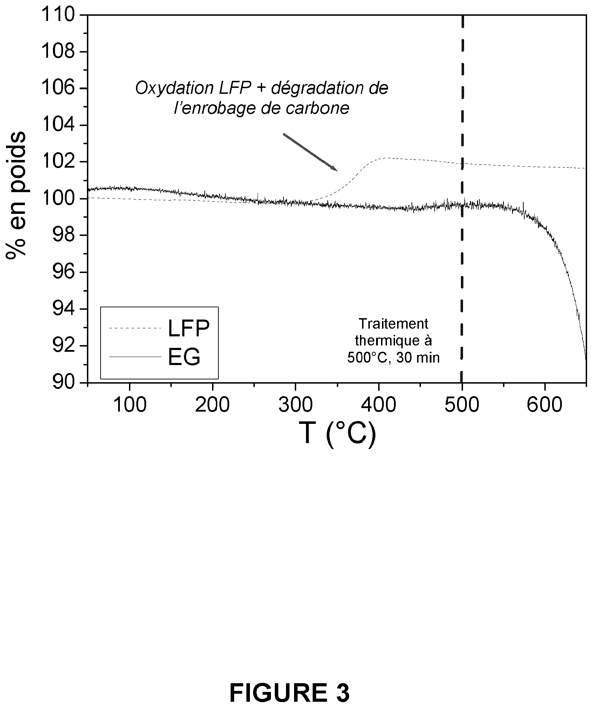

Les courbes thermogravimétriques des poudres de LiFePO₄/C et de graphène sont présentées à la Figure 3. Certaines différences notables sont observées entre les deux matériaux au-dessus de 300°C. Tout d'abord, le graphène est resté stable jusqu'à environ 550 °C, température à laquelle le début de la combustion a été observé. D'un autre côté, un gain de poids d'environ 2,3% a été observé entre 300 et 400 °C pour la poudre LiFePO₄/C. Il est possible que ce gain de poids soit le résultat de l'oxydation du LiFePO₄/C pour former du Li₃Fe₂(PO₄)₃ et du Fe₂O₃, cette oxydation étant aussi accompagnée par la dégradation de l'enrobage de carbone (Belharouak et al., Electrochem. Commun., 2005, 7, 983-988; Hamelet et al., J. Mater. Chem., 2009, 19, 3979-3991). Une température de 500 °C a donc été sélectionnée pour le traitement thermique dans l'Exemple 2 du mélange de graphène et LiFePO₄/C récupéré après une première étape de lavage. Les produits d'oxydation du LiFePO₄/C ont ensuite été séparés des feuilles de graphène dans une étape subséquente. Un rendement d'environ 80% a été obtenu en fonction du poids de graphène utilisé dans les différentes batteries et du poids de graphène récupéré à la fin du procédé.

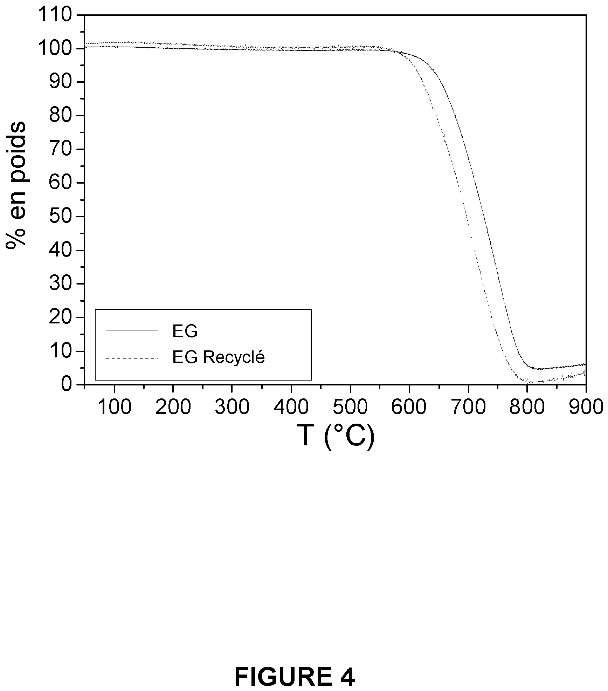

Pour valider l'efficacité du procédé de recyclage, la poudre de graphène recyclé a aussi été caractérisée par analyse thermogravimétrique. La Figure 4 présente les courbes thermogravimétriques pour la poudre de graphène avant (courbé identifiée "EG" sur la Figure 4) et après recyclage (courbé identifiée "EG recyclé" sur la Figure 4). Il apparait que les deux courbes sont similaires et la seule différence observée est que le début de la combustion de la poudre de graphène recyclé se produit à une température légèrement inférieure (environ 25 °C inférieure) par rapport au graphène frais. Ce comportement pourrait s'expliquer par une différence dans la taille des feuilles de graphène. En effet, les traitements supplémentaires par chaleur et ultrasons ont peut-être conduit à une poudre composée de particules plus petites de graphène recyclé.

### b) Analyse de diffraction des rayons X

Le graphène d'électrodes de LFP a été récupéré par le présent procédé de recyclage, et un film mince d'oxyde a aussi été obtenu. Les films d'oxyde, de graphène régulier et de graphène recyclé ont été caractérisés par diffraction des rayons X (XRD) en utilisant un diffractomètre Philips X'Pert™ θ-2θ avec radiation Cu Kα₁,α₂ (λ₁ = 1,5405Å, λ₂ = 1,5443Å) et un monochromateur pour éviter la présence de radiation K_{β}. Les deux films ont été déposés sur une plaque Si (400) monocristalline (simple pic à 2θ = 69). Les données ont été recueillies entre 5° et 60° en utilisant des incréments de 0,02° et un temps d'intégration de 1,3 s par incrément avec un détecteur X'Celerator™.

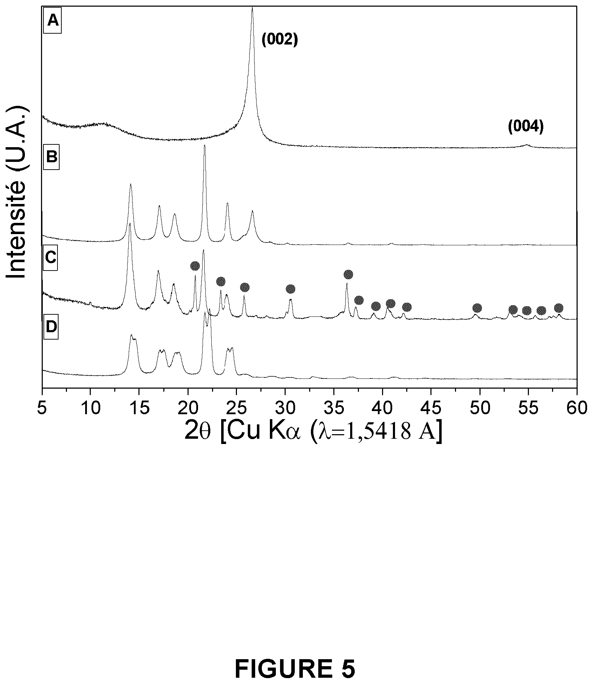

Une couche de graphène recyclé à 100% a été formée sur un séparateur Celgard®. Une couche d'oxyde a aussi été préparée sur un séparateur Celgard® par filtration de la solution aqueuse contenant les espèces oxydées. Ces couches de graphène et d'oxyde ont été caractérisées par diffraction des rayons X (XRD), tel qu'illustré à la Figure 5.

Les diagrammes XRD d'une couche autoportante de graphène et d'un séparateur Celgard® seul sont aussi présentés à la Figure 5. La Figure 5a montre un pic net asymétrique autour de 2θ = 27° pour la couche autoportante de graphène, lequel a été attribué au plan (002) d'un matériau graphitique. En outre, un pic de faible intensité à environ 2θ = 55°, généralement observé pour les poudres de graphène, est aussi présent (Yuqin et al., J. Power Sources, 1997, 68, 187-190). Finalement, le pic évasé à environ 2θ = 10-15° est assigné à un matériau d'oxyde de graphite généré pendant l'exfoliation électrochimique d'une feuille de graphite (Vargas et al., Electrochim. Acta, 2015, 165, 365-371; Wang et al., J. Phys. Chem. C, 2008, 112, 8192-8195; Guo et al., ACS nano, 2009, 3, 2653-2659).

À la Figure 5d, le diagramme XRD du séparateur Celgard® seul montre cinq pics entre 12 et 27°. Pour le film d'oxyde, en plus des cinq pics du support Celgard®, plusieurs petits pics ont été observés entre 20 et 27° et identifiés par des cercles dans la Figure 5c. Pour la couche de graphène recyclé (Figure 5b), le diagramme XRD est en accord avec la présence de Celgard® et de graphène et l'absence d'oxydes. Ces résultats confirment l'efficacité du procédé de recyclage tel qu'ici décrit.

### c) Microscopie électronique à balayage

Des études morphologiques de différents films d'électrodes ont été réalisées à l'aide d'un microscope électronique à balayage JEOL JSM-7600F™ équipé d'un détecteur EDS Oxford Instruments X-Max 80™.

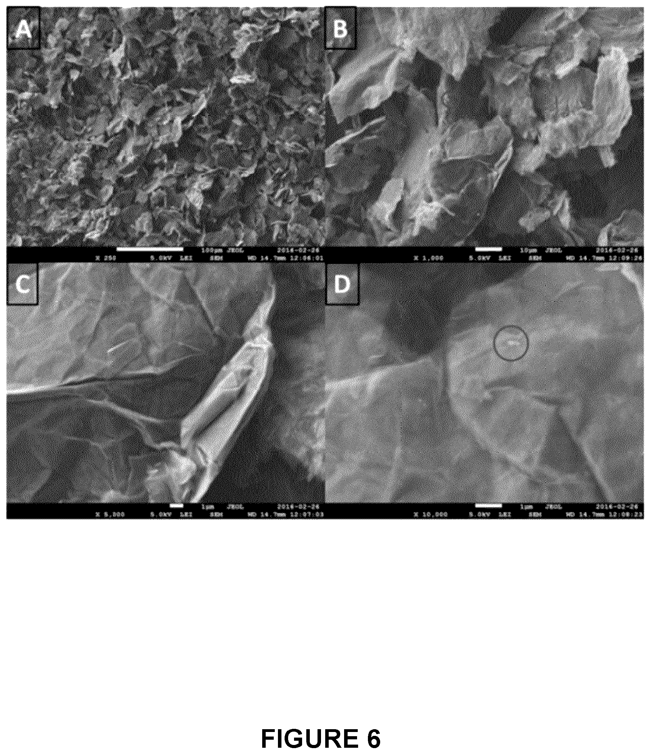

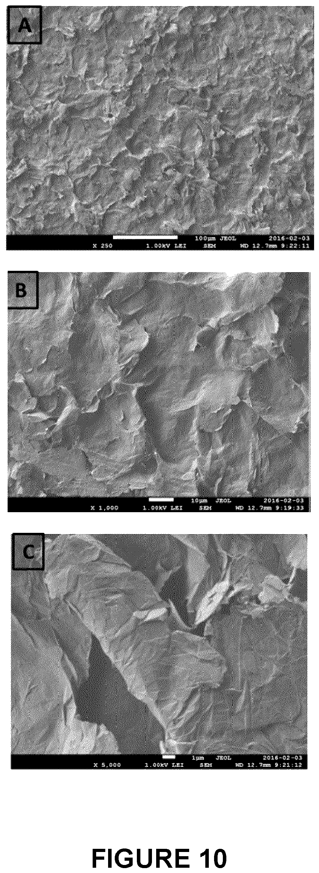

La couche de graphène recyclée a aussi été caractérisée par microscopie électronique à balayage (MEB). Les images MEB sont présentés à la Figure 6 avec différents agrandissements. Pour fins de comparaison, les images MEB d'une couche autoportante avec du graphène frais sont aussi présentées à la Figure 10, et montrent un assemblage de feuillets de graphène de plusieurs micromètres. La texture et la taille des feuillets de graphène recyclé sont différentes de ce qui a été observé pour un film autoportant de graphène frais présenté à la Figure 10. Ce résultat est aussi en accord avec l'analyse thermogravimétrique qui a démontré une température légèrement plus basse de combustion pour la poudre de graphène recyclé. Ce résultat corrobore l'hypothèse que cet effet peut être due à une différence de taille des feuillets de graphène résultant des traitements thermique et ultrasonique additionnels. En outre, il n'existe aucune preuve claire de la présence de particules résiduelles d'oxyde dans le film. Des particules minuscules et irrégulières, identifiées par des cercles à la figure 6, ont été observées mais sans pouvoir les attribuer à la présence d'oxyde.

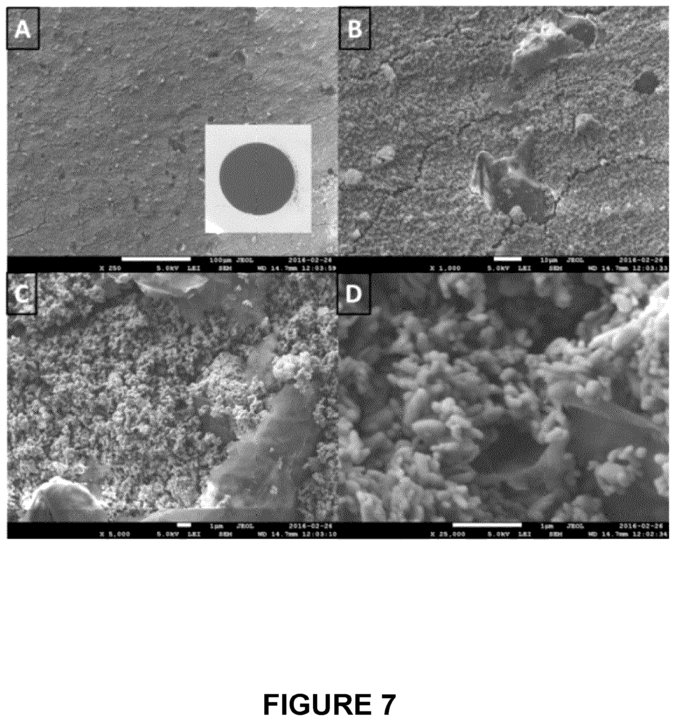

La couche d'oxyde a également été caractérisée par microscopie électronique à balayage. La Figure 7 présente des images MEB à différents agrandissements. Bien que n'apparaissant pas ici en version noir et blanc, l'image du séparateur en encart de la Figure 7a montre une couleur orange pour la poudre filtrée, ce qui suggère que le matériau LiFePO₄/C a été entièrement oxydé pendant le traitement thermique à 500 °C. Ces observations montrent que les étapes de séparation et de lavage avec l'eau désionisée, décrites à la Figure 1, ont permis une séparation efficace du graphène de la poudre d'oxyde.

### Exemple 4 - Performance électrochimique d'électrodes comprenant du graphène exfolié et du graphène exfolié recyclé

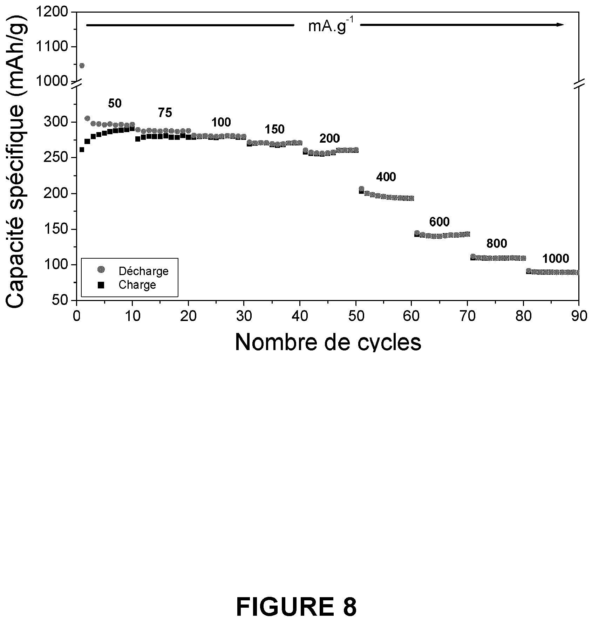

Les performances électrochimiques d'électrodes autoportantes de graphène ont été évaluées dans des piles boutons avec du lithium métallique comme contre-électrode. La poudre régulière de graphène (frais) a aussi été utilisée pour préparer un film autoportant de graphène, lequel a été utilisé comme électrode dans une batterie Li-ion sans ajout d'un collecteur de courant, liant ou additif de carbone. Les capacités spécifiques de charge et décharge d'une électrode autoportante de graphène sont présentées à la Figure 8. Une capacité en décharge d'environ 250-275 mAh/g a été obtenue pour des courants appliqués entre 50 et 200 mA/g. La capacité a diminué continuellement lorsque le taux de cyclage a été augmenté. À taux élevé, la capacité de décharge a semblé se stabiliser et une capacité moyenne de 85 mAh/g a été obtenue à 1A/g.

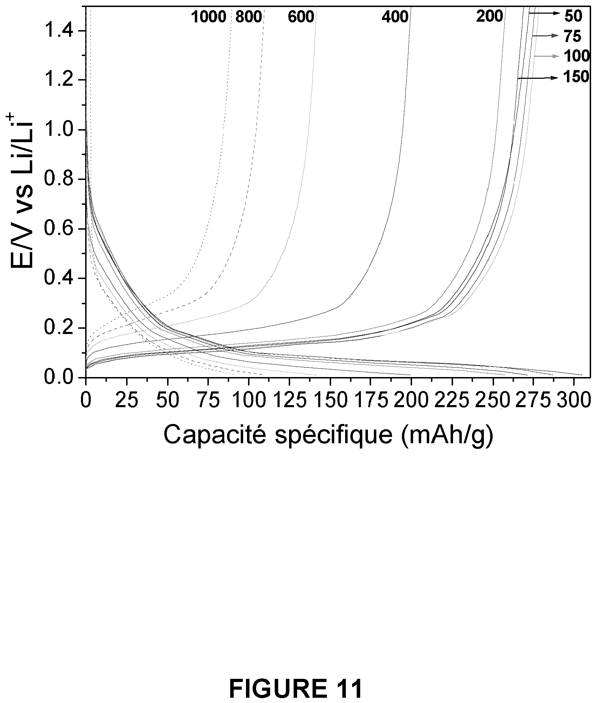

La Figure 11 illustre les profils de charge et décharge de l'électrode autoportante de graphène cyclée à différentes densités de courant allant de 50 à 1000 mA/g. Les courbes affichent les profils de tension typiquement observés pour des électrodes de graphite (Endo et al., Carbon, 2000, 38, 183-197). À faibles densités de courant (entre 50 et 200 mA/g), les courbes étaient très similaires sans augmentation significative de la polarisation. La tension de charge augmentait considérablement avec l'élévation du taux de cyclage en raison des résistance et polarisation plus grandes. Par conséquent, les capacités spécifiques récupérées pour des courants de charge et décharge élevés étaient plus petites.

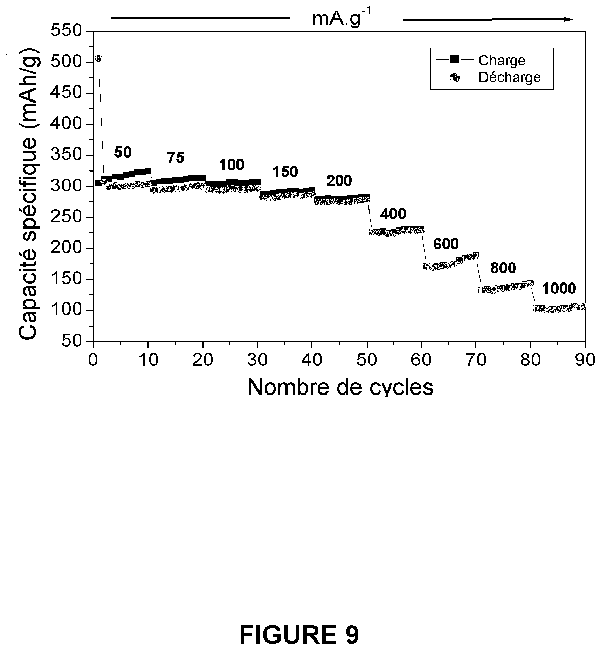

Une électrode préparée avec du graphène recyclé obtenu par le procédé de recyclage tel qu'ici défini a aussi été testée dans une pile bouton. Les capacités spécifiques de charge et décharge du film d'électrode de graphène recyclé apparaissent à la Figure 9. Les performances électrochimiques étaient similaires à celles obtenues pour l'électrode autoportante de graphène présentées à la Figure 8. Fait intéressant, la capacité irréversible pendant le premier cycle de charge/décharge était plus petite après le recyclage, présumément en raison des traitements thermiques supplémentaires et aussi de la morphologie différente des particules (Zheng et al., J. Electrochem. Soc., 1999, 146, 4014-4018). De plus, des densités de courant supérieures à 200 mA/g, ont donné des capacités spécifiques légèrement supérieures après le recyclage. Cette amélioration pourrait être expliquée par les plus petites feuilles de graphène après recyclage, ce qui faciliterait le stockage du lithium à des densités de courant élevées.

Lorsque préparées par le procédé de l'Exemple 1, les électrodes comprenant du graphène pour utilisation dans des batteries Li-ion ont été produites sans collecteur de courant, liant ou solvants nocifs normalement utilisés pour préparer les compositions électrodes. Une poudre de graphène, obtenue par exfoliation électrochimique d'une feuille de graphite, a été utilisée comme additif à une matériau actif (LiFePO₄/C ou Li₄Ti₅O₁₂) pour la fabrication d'électrodes de batterie Li-ion.

Le matériau d'électrode comprenant du graphène et un matériau électrochimiquement actif a ensuite été recyclé pour récupérer le graphène par le procédé ici décrit. Un des principaux avantages de ce procédé vert et rapide est le fait que des traitements au NMP et/ou avec des acide/base forts ne sont pas nécessaires pour récupérer les métaux de transition ou le graphène. Seuls un solvant ester de carbonate (tel le carbonate de diméthyle) et de l'eau peuvent être utilisés pour les étapes de lavage et de séparation. Une phase aqueuse contenant le matériau électrochimiquement actif ou sa version oxydée sont obtenus et peuvent être traités pour regénérer le matériau électrochimiquement actif pour utilisation subséquente dans la fabrication de batteries. De plus, la poudre de graphène recyclé est isolée avec un rendement d'au moins 80%. Ce rendement pourrait encore être optimisé. Le graphène récupéré peut aussi être utilisé ultérieurement pour la fabrication de nouvelles batteries. Une méthode de recyclage simple et peu énergétique a donc été développée afin de réutiliser le graphène présent dans les batteries au lithium ou lithium-ion usées.

Lorsque le matériau électrochimiquement actif n'est pas enrobé de carbone, le traitement thermique est évité, réduisant considérablement les coûts du procédé. Finalement, avec le présent procédé simple et respectueux de l'environnement, une poudre de graphène peut être récupérée de même que le matériau actif d'électrode, et éventuellement réutilisée dans la fabrication d'électrodes composites.

Les performances de l'électrode de graphène recyclé ont également été démontrées comme au moins semblables à celles du film réalisé avec du graphène exfolié par voie électrochimique. Ces résultats ont aussi démontré que le recyclage du graphène par le présent procédé permet de récupérer la majorité du graphène de l'électrode, ainsi que la préservation des propriétés électrochimiques du graphène. Ceci pourrait promouvoir l'utilisation du graphène dans les batteries Li-ion.

De nombreuses modifications pourraient être apportées à l'un quelconque des modes de réalisation décrits ci-dessus sans s'écarter du cadre de la présente invention.

## Revendications

1. Procédé pour le recyclage d'un matériau d'électrode comprenant du graphène et un matériau électrochimiquement actif, le procédé comprenant les étapes :
(i) d'addition, dans un ordre quelconque, d'eau et d'un solvant non miscible au matériau d'électrode, formant ainsi un système biphasique comprenant une phase organique et une phase aqueuse; et
(ii) de séparation de la phase organique et de la phase aqueuse; et
(iii) de filtration de la phase organique pour récupérer le graphène.

2. Le procédé de la revendication 1, dans lequel le solvant non miscible est un ester de carbonate.

3. Le procédé de la revendication 2, dans lequel l'ester de carbonate est le carbonate de diéthyle, le carbonate de diméthyle, le carbonate d'éthyle et de méthyle ou un mélange d'au moins deux de ceux-ci.

4. Le procédé de l'une quelconque des revendications 1 à 3, dans lequel le système biphasique a un rapport eau/solvant situé entre environ 3:1 et environ 1:2.

5. Le procédé de l'une quelconque des revendications 1 à 4, dans lequel l'étape (ii) comprend en outre un lavage de la phase organique avec de l'eau désionisée avant l'étape (iii) de filtration afin de retirer les traces résiduelles de matériau électrochimiquement actif.

6. Le procédé de l'une quelconque des revendications 1 à 5, le procédé comprenant en outre, avant l'étape (i), des étapes de lavage du matériau d'électrode avec un solvant pour l'obtention d'une suspension de graphène et de matériau électrochimiquement actif, et de filtration de ladite suspension.

7. Le procédé de la revendication 6, dans lequel l'étape de lavage comprend en outre un traitement de la suspension dans un bain à ultrasons.

8. Le procédé de la revendication 6 ou 7, comprenant en outre une étape supplémentaire de lavage avec un solvant après l'étape de filtration.

9. Le procédé de l'une quelconque des revendications 1 à 8, comprenant en outre, avant l'étape (i), une étape de traitement thermique effectuée à une température située entre environ 400°C et environ 550°C pendant au moins 20 minutes.

10. Le procédé de la revendication 9, dans lequel le traitement thermique est effectué à une température d'environ 500°C et pour une période de temps situé entre 20 et 60 minutes.

11. Le procédé de la revendication 9 ou 10, comprenant en outre une étape de pré-séchage avant l'étape de traitement thermique.

12. Le procédé de l'une quelconque des revendications 1 à 11, dans lequel le matériau électrochimiquement actif est choisi parmi TiO₂, Li₂TiO₃, Li₄Ti₅O₁₂, H₂Ti₅O₁₁ et H₂Ti₄O₉, ou une de leurs combinaisons, LiM'PO₄ dans lequel M' est Fe, Ni, Mn, Co, ou une de leurs combinaisons, LiV₃O₈, V₂O₅, LiMn₂O₄, LiM"O₂, dans lequel M" est Mn, Co, Ni, ou une de leurs combinaisons, Li(NiM''')O₂, dans lequel M'" est Mn, Co, Al, Fe, Cr, Ti, ou Zr, et leurs combinaisons.

13. Le procédé de l'une quelconque des revendications 1 à 11, dans lequel le matériau électrochimiquement actif est un titanate de lithium ou un phosphate de lithium et de métal.

14. Le procédé de la revendication 13, dans lequel le matériau électrochimiquement actif est Li₄Ti₅O₁₂, LiFePO₄, ou LiFePO₄ enrobé de carbone.

15. Le procédé de l'une quelconque des revendications 1 à 14, comprenant en outre des étapes de séparation de la phase aqueuse et de régénération du matériau électrochimiquement actif.

## Patentansprüche

1. Verfahren zum Recycling eines Elektrodenmaterials, umfassend Graphen und ein elektrochemisch aktives Material, das Verfahren umfassend die folgenden Schritte:
(i) Hinzufügen, in beliebiger Reihenfolge, von Wasser und einem nicht mischbaren Lösungsmittel zu dem Elektrodenmaterial, wodurch ein biphasisches System gebildet wird, umfassend eine organische Phase und eine wässrige Phase; und
(ii) Trennung der organischen Phase und der wässrigen Phase; und
(iii) Filtration der organischen Phase, um Graphen zurückzugewinnen.

2. Verfahren nach Anspruch 1, wobei das nicht mischbare Lösungsmittel ein Carbonatester ist.

3. Verfahren nach Anspruch 2, wobei der Carbonatester das Diethylcarbonat, das Dimethylcarbonat, das Ethylmethylcarbonat oder ein Gemisch aus mindestens zwei von diesen ist.

4. Verfahren nach einem der Ansprüche 1 bis 3, wobei das biphasische System ein Verhältnis Wasser/Lösungsmittel zwischen etwa 3:1 und etwa 1:2 aufweist.

5. Verfahren nach einem der Ansprüche 1 bis 4, wobei der Schritt (ii) ferner ein Waschen der organischen Phase mit entionisiertem Wasser vor dem Schritt (iii) Filtration umfasst, um restliche Spuren von elektrochemisch aktivem Material zu entfernen.

6. Verfahren nach einem der Ansprüche 1 bis 5, wobei das Verfahren vor Schritt (i) ferner die Schritte eines Waschens des Elektrodenmaterials mit einem Lösungsmittel, um eine Suspension aus Graphen und elektrochemisch aktivem Material zu erlangen, und einer Filtration der Suspension umfasst.

7. Verfahren nach Anspruch 6, wobei der Waschschritt ferner eine Behandlung der Suspension in einem Ultraschallbad umfasst.

8. Verfahren nach Anspruch 6 oder 7, ferner umfassend einen zusätzlichen Waschschritt mit einem Lösungsmittel nach dem Filtrationsschritt.

9. Verfahren nach einem der Ansprüche 1 bis 8, ferner umfassend vor Schritt (i) einen Wärmebehandlungsschritt, der bei einer Temperatur zwischen etwa 400 °C und etwa 550 °C über mindestens 20 Minuten ausgeführt wird.

10. Verfahren nach Anspruch 9, wobei die Wärmebehandlung bei einer Temperatur von etwa 500 °C und über einen Zeitraum zwischen 20 und 60 Minuten ausgeführt wird.

11. Verfahren nach Anspruch 9 oder 10, ferner umfassend einen Vortrocknungsschritt vor dem Wärmebehandlungsschritt.

12. Verfahren nach einem der Ansprüche 1 bis 11, wobei das elektrochemisch aktive Material ausgewählt ist aus TiO₂, Li₂TiO₃, Li4Ti03 Li₄Ti₅O₁₂ H₂Ti₅O₁₁ und H₂Ti₄O₉ oder einer ihrer Kombinationen, LiM'P04, wobei M' Fe, Ni, Mn, Co ist, oder einer ihrer Kombinationen, LiV₃O₈ V₂O₅, LiMn₂O₄, LiM"O₂, wobei M" Mn, Co, Ni ist, oder eine ihrer Kombination, Li(NiM")O₂, wobei M'" Mn, Co, Al, Fe, Cr, Ti oder Zr ist, und ihren Kombinationen.

13. Verfahren nach einem der Ansprüche 1 bis 11, wobei das elektrochemisch aktive Material ein Lithium-Titanat oder ein Lithium- und Metall-Phosphat ist.

14. Verfahren nach Anspruch 13, wobei das elektrochemisch aktive Material kohlenstoffbeschichtetes Li₄Ti₅O₁₂, LiFePO₄ oder LiFePO₄ ist.

15. Verfahren nach einem der Ansprüche 1 bis 14, ferner umfassend einen Trennschritt der wässrigen Phase und einen Regenerierungsschritt des elektrochemisch aktiven Materials.

## Claims

1. Process for recycling an electrode material comprising graphene and an electrochemically active material, the process comprising the steps of:
(i) adding, in any order, water and a non-miscible solvent to the electrode material, thereby forming a biphasic system comprising an organic phase and an aqueous phase; and
(ii) separating the organic layer and the aqueous phase; and
(iii) filtering the organic phase to recover the graphene.

2. The process of claim 1, wherein the non-miscible solvent is a carbonate ester.

3. The process of claim 2, wherein the carbonate ester is diethyl carbonate, dimethyl carbonate, ethyl methyl carbonate or a mixture of at least two thereof.

4. The process of any one of claims 1 to 3, wherein the biphasic system has a water/solvent ratio comprised between about 3:1 and about 1:2.

5. The process of any one of claims 1 to 4, wherein step (ii) further comprises washing the organic phase with deionized water prior to the filtration step (iii) to remove residual traces of electrochemically active material.

6. The process of any one of claims 1 to 5, the process further comprising, before step (i), steps of washing the electrode material using a solvent to obtain a suspension of graphene and electrochemically active material, and of filtering of said suspension.

7. The process of claim 6, wherein the washing step further comprises treating the suspension in an ultrasonic bath.

8. The process of claim 6 or 7, further comprising an additional washing step with a solvent after the filtration step.

9. The process of any one of claims 1 to 8, further comprising, before step (i), a thermal treatment step performed at a temperature of between about 400°C and about 550°C for at least 20 minutes.

10. The process of claim 9, wherein the thermal treatment is carried out at a temperature of about 500°C and for a period of time of between 20 and 60 minutes.

11. The process of claim 9 or 10, further comprising a pre-drying step before the thermal treatment step.

12. The process of any one of claims 1 to 11, wherein the electrochemically active material is selected from TiO₂, Li₂TiO₃, Li₄Ti₅O₁₂, H₂Ti₅O₁₁ and H₂Ti₄O₉, or a combination thereof, LiM'PO₄ wherein M' is Fe, Ni, Mn, Co, or a combination thereof, LiV₃O₈, V₂O₅, LiMn₂O₄, LiM"O₂, wherein M" is Mn, Co, Ni, or a combination thereof, Li(NiM'")O₂, wherein M'" is Mn, Co, Al, Fe, Cr, Ti, or Zr, and combinations thereof.

13. The process of any one of claims 1 to 11, wherein the electrochemically active material is a lithium titanate or a lithium metal phosphate.

14. The process of claim 13, wherein the electrochemically active material is Li₄Ti₅O₁₂, LiFePO₄, or carbon coated LiFePO₄.

15. The process of any one of claims 1 to 14, further comprising steps of separating the aqueous phase and of regenerating the electrochemically active material.
